(19) **Europäisches Patentamt European Patent Office Office européen des brevets**

(11) **EP 4 626 029 A1**

(12) **EUROPEAN PATENT APPLICATION**

(43) Date of publication:
01.10.2025 Bulletin 2025/40

(21) Application number: 24166845.8

(22) Date of filing: 27.03.2024

(51) International Patent Classification (IPC):
H04R 3/12 (2006.01)    G06F 3/16 (2006.01)
H04L 65/65 (2022.01)    H04W 4/80 (2018.01)
H04R 5/04 (2006.01)

(52) Cooperative Patent Classification (CPC):
H04R 3/12; G06F 3/165; H04L 65/65; H04W 4/80;
H04R 5/04; H04R 2420/07

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Sonova Consumer Hearing GmbH
30900 Wedemark (DE)

(72) Inventors:
• ZIMBALL, Johannes
Holle (DE)
• VOIGT, Maximilian
Hannover (DE)
• STEIN, Elmar
Hannover (DE)
• RIOS GRAJALES, Juan Diego
Hannover (DE)

(54) **METHOD FOR SYNCHRONIZING WIRELESSLY CONNECTED ELECTRONIC DEVICES AND WIRELESS DEVICE**

(57) For synchronizing wirelessly connected audio playback devices with high precision, a first audio device (310, 410), e.g. a soundbar, has a first and a second radio transmitter (414, 415). A plurality of second audio devices (320, 420-422), e.g. loudspeaker boxes, each have a first and a second radio receiver (4204, 4205). The first radio transmitter (414) transmits, over a network with high temporal precision, a first data stream (3301) that comprises synchronization packets (811-816). The second radio transmitter (415) transmits, over a different network with high bandwidth, a second data stream (3311) comprising audio data packets (821-826). The first audio device (310, 410) plays back first audio data. Each of the second audio devices (320, 420-422) receives the first and second data streams (3301, 3311) and plays back the received audio data based on synchronization information in the synchronization packets, thus achieving temporal synchronization with the first audio device.

Fig. 4

**Description**

The invention relates to synchronizing electronic devices that are wirelessly connected to each other.

Background

Various approaches are known to synchronize wirelessly connected devices. However, a high precision synchronization remains difficult to achieve. It is particularly important in the field of audio playback devices that are intended for playing back audio content in a coordinated manner, since the human ear is sensitive to small temporal deviations of few milliseconds. For example, a plurality of audio playback devices, such as loudspeaker boxes, which are located in the same room and intended for playing back multi-channel audio content, such as object-based immersive 3D audio, need to be synchronized very precisely. As long as such audio playback devices can receive signals via wires, such synchronization may easily be achieved, since only acoustical signal run times due to sound propagation need to be considered. They can be calculated or measured and then compensated. Thus, only very small time-delays due to sound propagation need to be compensated for wired speakers.

However, if no wire-bound signal for synchronization is available, synchronization needs to be based on wirelessly received signals. Therefore also transmission latency, buffering and processing of the electrical audio signal itself needs to be considered for wireless audio streaming, in addition to the acoustical sound propagation. This is difficult due to unknown signal run times and jitter, which is usually unstable for radio signals.

For a small number of playback devices and a total bandwidth of up to 2 Mbps, Bluetooth Low Energy (LE) Audio (BLE) is a known solution. It uses isochronous channels to synchronize up to five individual channels wirelessly with high precision. This allows synchronized audio playback through a main loudspeaker or soundbar and up to five additional loudspeakers. However, the number of loudspeaker devices is low and the bandwidth is limited, so that the audio signal is compressed for the transmission. Further, retransmits are included, so that not the full bandwidth is available for audio data.

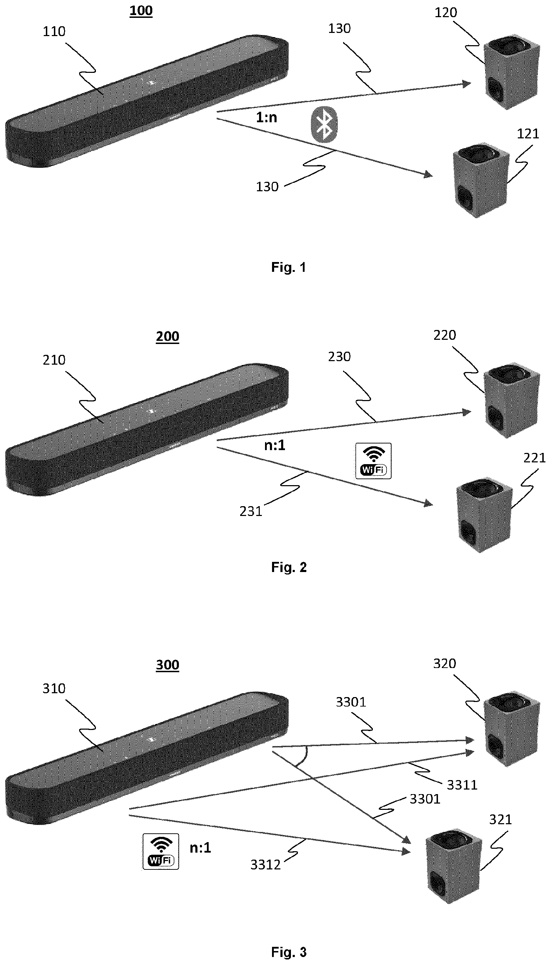

Fig. 1 shows a system 100 with two loudspeaker boxes 120, 121 that are wirelessly connected to a first source device 110 via a Bluetooth network, for example BLE. The first source device 110 generates a multicast BLE connection, in particular a BLE Audio Broadcast stream (BIS) 130 for connecting each of the loudspeaker boxes 120, 121. Using the latest BLE standard, the device 110 can broadcast up to five independent audio channels if the audio data are compressed via an audio codec. A plurality of loudspeaker boxes can be connected that each have to select the correct audio channel and stream, and the total bandwidth is limited to 2 Mbps.

On the other hand, other network protocols such as Wi-Fi are known that may provide much higher bandwidths and therefore higher sample rates or bit rates, but due to varying traffic, error correction and other factors have unpredictable latency.

Fig. 2 shows a system 200 with two loudspeaker boxes 220, 221 that are wirelessly connected to an access point (AP) device 210 via a network with very high bandwidth, e.g. Wi-Fi (IEEE 802.11x) or Wi-Fi Direct. The second AP device 210 generates separate unicast Wi-Fi connections 230, 231 to each of the loudspeaker boxes 220, 221 or a Wi-Fi multicast connection. The number of loudspeaker boxes that can be connected is limited only by the Wi-Fi bandwidth, and each of the links can provide a much higher bandwidth than a BLE connection. It is a problem that packet run times are not predictable in a reliable way and are usually variable due to high jitter. Thus, a synchronous playback from multiple loudspeakers is difficult to achieve.

US2023/0276515 A1 describes a low-latency wireless audio transmitting and receiving method by establishing a connected isochronous stream (CIS) link based on a high-speed physical layer that has a higher data transmission rate than a BLE physical layer, wherein audio data are transmitted to an audio receiving device through the CIS link based on the high-speed physical layer. For this purpose, the CIS protocol is transferred to a Wi-Fi network operated in a point-to-point connection. However, the solution is not suitable for the standard BLE protocol and the standard Wi-Fi protocol. Therefore, either modifications to the BLE/CIS protocol need to be made for adapting it to Wi-Fi, or modifications to the standard Wi-Fi protocol need to be made for adapting it to BLE/CIS.

Summary of the Invention

It is an object of the invention to provide an improved solution for synchronizing electronic devices, in particular a group of audio playback devices, while connecting them wirelessly by a high bandwidth connection.

This object is achieved by a method of claim 1. In one embodiment, the invention relates to an audio playback device of claim 8. In another embodiment, the invention relates to a wireless loudspeaker device of claim 13.

The present invention is based on the usage of two different wireless networks, wherein at least a first network provides packets with a more accurate timing than the second network, and wherein the second network provides at least a higher bandwidth than the first network.

Various aspects and advantageous embodiments are provided in the following detailed description and in the claims.

Brief Description of the Drawings

The present invention will be better understood from the following detailed description in conjunction with the accompanying drawings, in which like reference numerals designate like parts. The drawings show in

Fig. 1    two wireless loudspeaker boxes connected to a playback device via BLE;

Fig. 2    two wireless loudspeaker boxes connected to a playback device via Wi-Fi;

Fig. 3    the principle of two wireless loudspeaker boxes connected to a playback device via two different networks, according to an embodiment;

Fig. 4    a schematic diagram of an audio playback system, according to an embodiment;

Fig. 5    a schematic diagram of an audio playback system, according to another embodiment;

Fig. 6    a schematic block diagram showing components of a transmitter device and a receiver device;

Fig. 7    a timing diagram with synchronization (sync) packets;

Fig. 8    a timing diagram showing a temporal relationship between packets of the first and the second network and audio playout packets;

Fig. 9    a timing diagram showing network delays in a first example;

Fig. 10   a timing diagram showing network delays in a second example;

Fig. 11   a schematic block diagram showing components of a transmitter device; and

Fig. 12   a flow-chart.

Detailed Description of the Invention

In an embodiment of the invention, Fig. 3 shows a system 300 with two wireless loudspeaker boxes 320, 321 that are connected to an audio hub or source device 310 via two different wireless networks. The source device 310 comprises at least two transmitters, one for each of the networks. In the example shown, a first transmitter of the source device 310 provides multicast or broadcast BLE connections 3301 to the loudspeaker boxes 320, 321, and a second transmitter of the source device 310 provides unicast or multicast Wi-Fi connections 3311, 3312 to the loudspeaker boxes 320, 321. The BLE connections 3301 comprise at least one isochronous channel. Each of the loudspeaker boxes 320, 321 has at least two wireless receivers, one corresponding to each of the source device's transmitters. The source device provides at least synchronization signals via the first network connection 3301 and audio data via the second network connection 3311, 3312. Each of the loudspeaker boxes receives synchronization signals and audio data through its first and second receivers, respectively, and combines them before playing back the audio data. The first network connection 3301 provides a very stable and precise time reference (like a "heartbeat") for playing back the audio data that are provided via the second network connection 3311, 3312. For example, the Bluetooth standard (from BT version 5.2 and beyond) provides isochronous channels that can be used for such synchronization. Due to the lower latency and higher bandwidth of the second network connection 3311, 3312, the loudspeaker boxes will usually receive the audio data packets before the corresponding synchronization packets; therefore, each loudspeaker box buffers the received audio data packets until the time of intended playback as indicated by the synchronization packet.

In an embodiment, the source device 310 may be integrated in an audio playback device, such as a soundbar, so that the loudspeaker boxes 320, 321 can be used for playing back audio data simultaneously with the soundbar and in addition to the soundbar playback. In an alternative embodiment, where the source device 310 is a hub without loudspeaker, the audio playback of the loudspeaker boxes 320, 321 can be synchronized to each other. One advantage of the present invention is that the audio data played back by the loudspeaker boxes will be synchronized to each other and to the audio data played back by the soundbar with high precision. Another advantage is that it is possible and very easy to add or remove single loudspeaker boxes on the fly, since the synchronization is performed automatically for the group of connected loudspeaker boxes, and that the number of loudspeaker boxes in such group is not limited. Another advantage is that it that standard network connections (i.e., normal BLE and Wi-Fi connections) may be used, at least with respect to their physical layer.

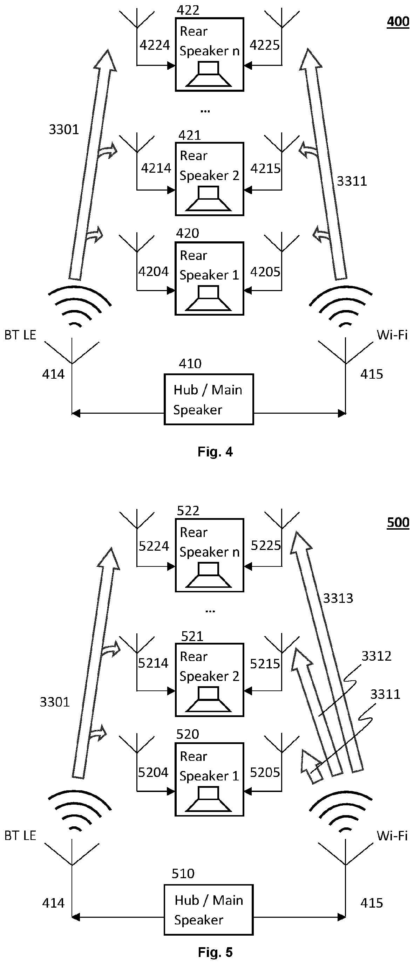

Fig. 4 shows a schematic diagram of an audio playback system 400, according to an embodiment. It comprises an audio hub 410, which may also be a soundbar or a main speaker, and one or more separate audio playback devices 420, 421, 422 or loudspeaker boxes which may act as rear speakers. The hub 410 has two different wireless transmitters for different networks (i.e., different protocols): a first transmitter 414 is capable of transmitting at least synchronization packets to the audio playback devices using a first network 3301 protocol, while the second transmitter 415 is capable of transmitting at least audio data packets to the audio playback devices using a different second network 3311 protocol. Each of the audio playback devices 420, 421, 422 has two wireless receivers, one for each of the different networks 3301, 3311. It is noted that although three audio playback devices 420, 421, 422 are depicted, more or less such devices may be used. For example, a first playback device 420 has a first receiver 4204 being a BLE receiver for receiving synchronization data and a second receiver 4205 being a Wi-Fi receiver for receiving audio data. Each playback device may extract its individual audio data from the received audio packets of the second network connection 3311, and combines the received packets as described further below, thus enabling synchronized audio playback. Additionally, for each of the audio playback devices 420, 421, 422 their synchronized audio playback may be adjusted according to acoustic signal run times or the individual loudspeaker position in a known manner. In the present embodiment, both the first and the second network 3301, 3311 use broadcast or multicast transmission.

Fig. 5 shows a schematic diagram of an audio playback system 500, according to another embodiment. It is similar to the previous embodiment, except that the hub 510 uses for the second network unicast (or multicast) transmission with separate channels 3311, 3312, 3313 to each of the audio playback devices 520, 521, 522, while the first network 3301 uses broadcast or multicast as above. This may allow different network protocol types for the second network than the previous embodiment. Each audio playback device comprises a respective first receiver 5204, 5214, 5224 for the first network and second receiver 5205, 5215, 5225 for the second network. This embodiment may also include generating separate audio data in the hub 510 for transmission to the different audio playback devices 520-522. Alternatively, each audio playback device 520-522 may extract its individual audio data from the received audio packets of its respective channel of the second network connection 3311-3313, like audio playback devices 420-422 of the previous embodiment.

In a variant of the above-described embodiments, at least one additional subwoofer (not shown) receives audio packets directly via the first network 3301, other than the other audio playback devices 420-422,520-522. The subwoofer may optionally omit a connection to the second network 3311. Such audio playback system will then comprise a hub or soundbar 410, at least one subwoofer and at least one of the other audio playback devices 420-422,520-522.

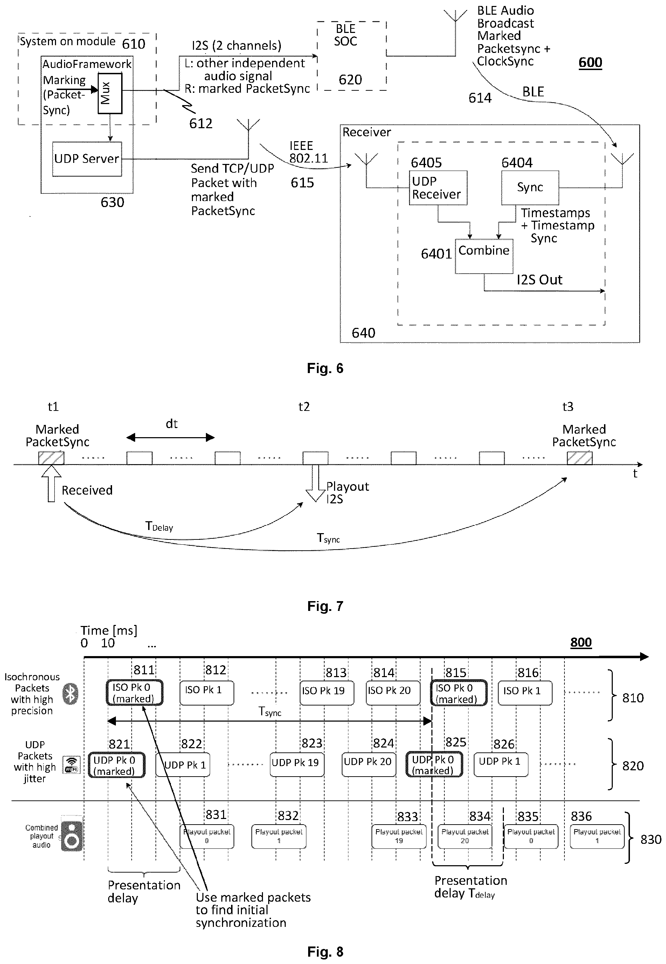

Fig. 6 shows a schematic block diagram with components of the transmitter devices and the receiver devices, in one embodiment. The components may be part of a system 600 implemented by a hub device and an audio playback device. The hub device comprises an audio processing module 610, a first network interface module 620 and a second network interface module 630. Each of the network interface modules 620, 630 comprises at least a respective transmitter. In this example, the first network interface module 620 is a Bluetooth module that provides a BLE audio broadcast connection with isochronous channels 614, while the second network interface module 630 is an IEEE802.11x compatible or Wi-Fi module, such as a UDP server that sends TCP/UDP packets over a Wi-Fi connection 615. The audio processing module 610 may provide a digital audio signal 612 in any format, e.g. a dual-channel signal I2S or a multiplexed TDM signal, to the first network interface module 620, as usual. These are widely used, so that an implementation can be based on standard components. In some embodiments, the audio processing module 610 may generate different audio data packets for different receivers or audio playback devices. It is also possible to implement the audio processing module 610 and the first network interface module 620 on a single chip. However, the digital audio signal, or at least one channel thereof, comprises time-stamp markings in some of the packets, which are thus marked as synchronization packets, e.g. by watermarking one of the channels. Since it is sufficient if one of the two channels comprises the marked synchronization packets, the other channel may be used for redundancy or for a different purpose, e.g., it may comprise audio signals for a subwoofer channel. The first network interface module 620 transmits at least the synchronization packets via a BLE broadcast or multicast connection 614, and preferably over a BLE isochronous channel. This ensures a precise synchronization. The first network interface module 620 may additionally transmit audio data to be played back, at least as much as its bandwidth permits (e.g. a subwoofer channel). The audio processing module 610 further provides audio data and timestamp markings to the second network interface module 630, which generates audio data packets such as TCP/UDP packets, adds the markings to the respective ones of the audio data packets and then transmits the packets. This ensures a high bandwidth transmission and a robust relation between audio packets and synchronization packets. In one embodiment, the audio data transmitted by the second network interface module 630 may be uncompressed, using the high bandwidth available.

The receiver module 640 within the audio playback device comprises a first receiver 6404 for receiving the packets of the BLE broadcast or multicast connection 614, a second receiver 6405 for receiving the TCP/UDP packets of the Wi-Fi connection 615 and a combiner module 6401, which may act as a synchronizer module. The first receiver 6404 receives sync packets, and extracts and provides timestamps and/or timestamp synchronization signals to the combiner module 6401.The second receiver 6405 may optionally extract a portion of audio data to be replayed from the received audio data packets, and provides to the combiner module 6401 at least the extracted or the received audio data packets to be replayed. One module, e.g. the second receiver 6405 or the combiner module 6401, extracts the timestamp markings from the audio data packets, and one of said modules buffers the audio data packets. The combiner module 6401 aligns the audio data packets for output according to the timestamps, as described further below. Thus, the audio data output is synchronized according to the timestamps and the synchronized audio data $I2S_{Out}$ can be provided for playback. Receiver module 640 may be included in an external loudspeaker box, such as rear speaker 420-422, 520-522 for a soundbar. Some additional blocks for audio playback, such as a DAC, amplifier etc. may be required but are not shown in Fig. 6. In an embodiment, also a clock signal in the receiver module 640 is synchronized based on the timestamps. It may be generated by a PLL, for example.

Fig. 7 shows a basic timing diagram, which is exemplarily explained with respect to the previous embodiment. However, suitable other network types may be used instead. The receiver module 640 receives, through a BLE isochronous channel, a first BLE packet marked as synchronization packet at a first time t1. It extracts synchronization information from the first BLE packet. It may also receive in regular time intervals dt (e.g., dt = 7.5 ms or 10 ms) subsequent BLE packets that are not marked as synchronization packets, which it may ignore or utilize as additional synchronization. E.g., such subsequent BLE packets may comprise audio or other data for a different receiver. At a second time t2, which is defined by a time difference $T_{Delay}$ relative to the first time t1, a defined amount of audio data that has been received by the UDP receiver 6405 before or during $T_{Delay}$ is provided on the output $I2S_{Out}$ to a loudspeaker for playback ("Playout"). Note that the second time t2 may but needs not necessarily coincide with receiving a BLE packet, as depicted. The provided audio data has been received in Wi-Fi packets before playout, wherein at least one of the Wi-Fi packets comprises synchronization information that matches the synchronization information of the first BLE packet. This is referred to as logical synchronization herein and ensures that the correct audio data are played out at a particular time. A further BLE packet marked as synchronization packet is received at a third time t3, at a fixed time difference $T_{sync}$ after the first BLE packet has been received. Thus, a stable "heartbeat" with a frequency of $1/T_{sync}$ (or 1/dt) is available to the receiver and is used for synchronized audio playout. The playout delay $T_{Delay}$ may be derived from a processing time and/or a sound transmission delay required for the current audio playback device. If further audio playback devices are connected to the same hub as the current audio playback device, the playout delay $T_{Delay}$ may also be derived from a processing time and/or sound transmission delay required for the other playback device, in order to achieve synchronized playback of all playback devices connected to the hub. In various embodiments, either only marked BLE packets are used for temporally and logically synchronizing audio data, or all the BLE packets are used for temporally synchronizing audio data while only marked BLE packets are used for logically synchronizing audio data.

Fig. 8 shows a more detailed temporal relationship between packets of the first and the second network received at an audio playback device and audio playout packets. A first stream 810, which may be a BLE broadcast isochronous stream (BIS), comprises isochronous packets of the first network (sync packets) that are received with high temporal precision. A first sync packet 811 is a marked ISO packet that comprises synchronization information, e.g. a first sequence number or ID value. A defined number (twenty exemplarily) of subsequent sync packets 812, 813, 814 are unmarked ISO packets that do not comprise dedicated synchronization information, while the next sync packet 815 comprises again synchronization information. Preferably, each of the marked sync packets 811, 815 comprises individual synchronization information.

A second stream 820, which may be an IEEE802.11x or Wi-Fi/Wi-Fi Direct stream, comprises audio data packets of the second network that are received with low latency and high data rate (at least lower latency and higher data rate than the first stream) but high jitter, e.g. UDP packets. A first UDP packet 821 comprises audio data and synchronization data, such as a sequence number or ID value that matches the sequence number or ID value of the first marked sync packet 811. At the time t1 of receiving the first marked sync packet 811, at least a portion of the first UDP packet 821 has usually already been received and buffered at the receiver module 640. Depending on the bandwidths provided by the first and second networks and other parameters, the complete first UDP packet 821 and potentially one or more further UDP packets 822, 823 may have been received and buffered at the time t1 of receiving the first marked sync packet 811. The time t1 of receiving the first marked sync packet 811 triggers the playout of the first buffered audio data packet 831. For the playout of subsequent audio data packets 832, 833, a pre-defined constant presentation delay $T_{delay}$ is maintained. The audio data may be mapped directly from a UDP packet 821 to a playout packet 831. The procedure repeats cyclically, i.e. after a complete synchronization cycle $T_{sync}$ the next marked ISO packet 815 is received in the first stream 810 and the next marked UDP packet 825 with synchronization data is received in the second stream 820. The synchronization data of the marked ISO packet 815 are compared to those of the marked UDP packet 825, and if both match, the playout packet 835 that corresponds to the UDP packet 825 proceeds to playback at its respective playout time (i.e., at $T_{Delay}$ after reception of sync packet 815), together with a defined number of subsequent packets. In this way, an initial synchronization can easily and reliably be found.

It is noted that in the above described embodiment the number of ISO packets (per cycle) of the first stream 810 is equal to the number of UDP packets (per cycle) of the second stream 820. Thus, the time difference between subsequent UDP packets is, on average, equal to the time difference between subsequent ISO packets, although it varies due to jitter. However, this is only for simplification and the number of packets per cycle may differ in the two streams in other embodiments, so that each cycle has n sync packets and m audio data packets. In that case, resynchronization can be performed every $n^{th}$ sync packet and every $m^{th}$ audio data packet. Further in the example, all audio data are transmitted in the second stream 820, while the first stream 810 is not used for transmitting audio data. In another embodiment however, a first portion of audio data may be transmitted in the first stream 810, e.g. for low data rate audio or audio of a specific channel. The audio playback is improved and the data rate increased by additional audio data that are transmitted in the second stream 820, as described, and that are added to the first audio portion. Synchronized playback remains as described above.

To ensure that every packet is mapped to the correct time stamp, it may be advantageous (though not required) if the time $T_{delay}$ between receiving the marked sync packet and the playout is smaller than the time $T_{sync}$ between subsequent markings.

The playout time $T_{Delay}$ between the reception of the sync packet via BLE and the transmission of playout data (e.g. from the buffer to the DAC) should be fixed, so that the playout packets comprising the audio data for playback are provided in fixed time intervals in the synchronized output stream $I2S_{Out}$ after the buffer. In a case where a sync packet has not been received or has been lost, e.g. due to radio interference, the combiner module 6401 may continue to play out the received audio data packets 820 in these fixed time intervals, and may resynchronize later. For this purpose, it may have a stand-by timer module that can be re-adjusted by the received marked ISO packets.

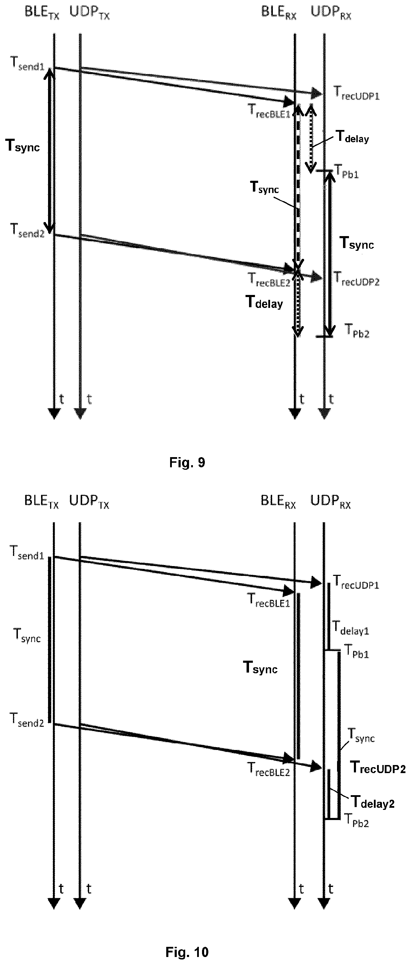

A reception of a marked sync packet within the above-described fixed playout timeframe (i.e., unexpected sync packet) may cause a resynchronization of the audio playback. To resynchronize the frames, it can be assumed that the BLE packet marking is periodic and the time difference between BLE marked packets is constant: $\Delta T_{recBLE} = T_{recBLE,i-1} - T_{recBLE,i} = T_{sync}$ (see Fig. 9). In this way, playback synchronization can be obtained by setting a fixed playout time delay $T_{Delay}$ relative to the arrival time of the synchronous BLE sync package $T_{recBLE}$. The time of playback of the corresponding audio packet can be specified by $T_{PB,i} = T_{recBLE,i} + T_{Delay}$.

Fig. 9 shows a timing diagram with network delays in a first example, where the synchronization of the packet playout is obtained by referencing the playback time $T_{Pb,1}$ to the BLE sync signal. I.e., the playout delay (or playback delay) $T_{delay}$ refers to the time $T_{recBLE1}$ at which the first BLE sync packet has been received. Thus, the audio data that was received at $T_{recUDP1}$ (before $T_{recBLE1}$) is played back at $T_{Pb1}$. Subsequent audio data packets are played within the following period of $T_{sync}$ in fixed intervals.

Alternatively, the audio playback can be ensured to be synchronous if the I2S playout time difference $\Delta T_{PB}$ is equal to the BLE period time, i.e. $T_{recBLE\ i+1} - T_{recBLE\ i} = T_{sync} = \Delta T_{PB}$. In this case, the specific playout time delay for each frame $T_{delay,i}$ is calculated. This requires that $T_{PB\ i+1} = T_{PB\ i} + \Delta T_{PB}$ is a known value and that the individual packet delay time is calculated from the individual arrival time of the UDP frame $T_{recUDP}$, i.e.

$$T_{Pb\ i+1} = T_{recUDP\ i+1} + T_{delay\ i+1}$$

so that a variable playback delay on each frame can be calculated according to $T_{delay\ i+1} = T_{Pb\ i} + T_{sync} - T_{recUDP\ i+1}$. Fig. 10 shows the playback time synchronization with a variable I2S playout delay.

All other mechanisms, like e.g. PLL adjustment to synchronize the different clocks between transmitter and receiver, stay in place, so that the receiver clocks adjust to the transmitter clock based on the synchronization signal via BLE, while the BLE transmitter clock adjusts itself towards the reception path (in this case I2S). Some interfaces may also be implemented differently, other than BT and Wi-Fi. For example, the transfer between an audio source device and the BLE transmitter can be done via I2S, SPI, USB or other known audio capable interfaces. Instead of Wi-Fi or Wi-Fi Direct, LAN or other high bandwidth networks can also be used.

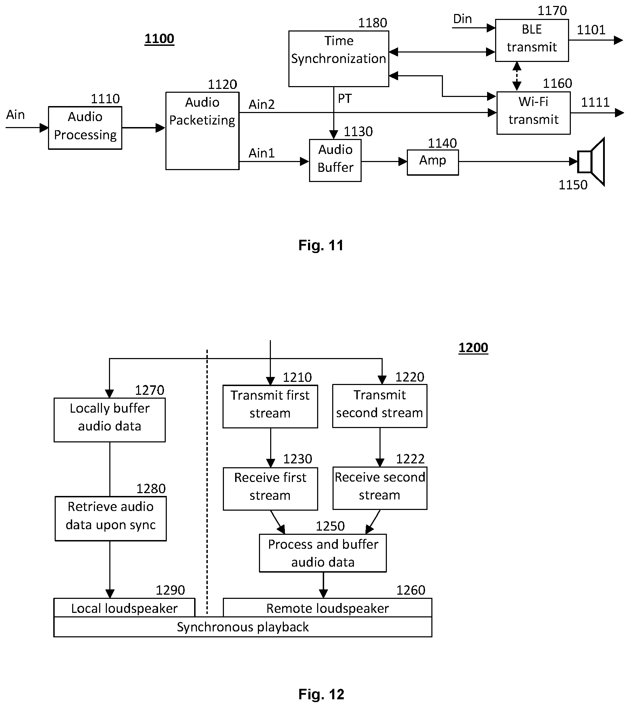

Fig. 11 shows, in one embodiment, a schematic block diagram of a hub device that is an audio transmitting and playback device 1100, e.g. a soundbar. An input audio stream Ain is received and optionally processed in an audio processing block 1110, e.g. analyzed, equalized etc. The processed audio data are split into two audio data streams Ain1, Ain2 that do not overlap and may be packetized in an audio packetizing block 1120. Packets of one of the audio data streams Ain1 are buffered in audio buffer 1130. Upon reception of a playback trigger signal PT from a time synchronization block 1180, the buffered packets are retrieved from the buffer, converted to analog signals (DAC not shown) and provided to an amplifier 1140 and loudspeaker 1150 for local playback at the hub device. Blocks 1130, 1140 and parts of block 1120 may therefore form an audio playback module. Packets of the other audio data stream Ain2 are wirelessly transmitted to one or more remote audio playback devices via a radio interface 1160, in a stream 1111 with low latency and high bandwidth, such as UDP packets via Wi-Fi or Wi-Fi Direct. Before transmission, synchronization data are received from the time synchronization block 1180 and added to some of these packets, as described above. In the BLE radio interface block 1170, synchronization packets are generated, marked by synchronization data received from the time synchronization block 1180 and transmitted via a separate wireless isochronous stream 1101, as described above. The time synchronization block 1180 provides the playback trigger signal PT at a pre-defined time after a synchronization packet has been transmitted, so that the audio signal that is played back through local loudspeaker 1150 is synchronous with audio signals played back through one or more remote external loudspeakers 320, 321 that wirelessly receive the streams 1101,1111, as described above. In one embodiment, it is possible to adjust the delay of the playback trigger signal PT, e.g. via a user interface or automatic measurement (not shown). Alternatively, it is possible to adjust the playout time by selecting the marked UDP packet as 1st, 2nd,... nth etc. packet in a chunk of playout packets. The adjustment may be according to acoustic signal delays if the distance between the device 1100 and the external loudspeaker 320,321 is very low or very high.

In one embodiment, at least one of the BLE radio interface 1170 and the high-bandwidth radio interface 1160 creates a hidden exclusive hotspot. For example, radio interface 1160 may omit sending advertising messages, so that the identifier (SSID) of the Wi-Fi network 1111, 3311-3313 is not distributed and cannot be discovered by other wireless devices; thus, the network is hidden. Each external loudspeaker box 320, 321 may receive pairing information (e.g. through the BLE channel 1101) for connecting to the hub device or may otherwise be configured to connect to the hidden Wi-Fi network 1111, 3311-3313. The network may be exclusive in that it allows only client devices that identify themselves as wireless loudspeaker boxes to the hub device. Each of the wireless loudspeaker devices 320, 321, 420-523 may comprise a memory for storing configuration data required for accessing the hidden exclusive Wi-Fi (or Wi-Fi Direct etc.) network. In one embodiment, the same mechanism can in principle be used for the BLE network.

Packets can be marked in various ways: for example, a UDP packet can be marked by adding a byte to the packet header, where the byte comprises an identifier or a sequence number. The additional byte will be removed automatically at the receiver before the actual audio processing. For marking a BLE packet, its standard block length that results from LC3 audio coding may be increased, e.g. by adding a byte that also comprises an identifier or sequence number. The receiver detects this modification and the time of its reception, and then may also remove the additional byte.

Fig. 12 shows a flow-chart of a method 1200 for synchronizing audio playback of a first audio device and audio playback of a second audio device, in one embodiment. The first audio device has a first radio transmitter and a second radio transmitter, and the second audio device has a first radio receiver and a second radio receiver, such as audio devices 410 and 420 described above. The method 1200 comprises transmitting 1210, via the first radio transmitter, a first data stream to the second audio device. The first data stream is an isochronous stream, i.e. it comprises synchronization packets at fixed time intervals, wherein the synchronization packets comprise synchronization information, such as an identifier. The method further comprises transmitting 1220, via the second radio transmitter, a second data stream to the second audio device, wherein the second data stream comprises audio data packets.

In the present embodiment, the first audio device is also an audio playback device; therefore, at least a portion of the audio data is locally buffered 1270 in the first audio device. Optionally, the audio data may be processed before or after the local buffering, e.g. by extracting only audio data required for local playback at the first audio device. The method further comprises retrieving 1280 the audio data from the buffer, triggered by a playback trigger signal PT for synchronized playback as describe above, and providing them to an amplifier and a local loudspeaker. These are included in the first audio device to enable a first playback 1290 through the local loudspeaker.

In the second audio device, the method further comprises receiving 1230 the first data stream at the first radio receiver and receiving 1240 the second data stream at the second radio receiver, as already explained e.g. with respect to Figs. 4 and 5. The receiving 1230 of the synchronization packets of the first data stream comprises at least recording the time of receipt, e.g. in receive timestamps, and extracting synchronization information. Then, the received synchronization information and corresponding recorded time of receipt are processed 1250, at the second audio device, together with the audio data packets of the second data stream for a second playback 1260, which is synchronized with the first playback as described above. That is, the first playback and the second playback are temporally synchronized by determining a playback time of an audio data packet at the second audio device from a time of reception of the corresponding synchronization packet of the first audio stream, wherein the correspondence is determined from the synchronization data comprised in the synchronization packet.

In an embodiment, the invention relates to a computer-readable data carrier having stored thereon instructions that when executed cause the computer to perform a method as described above.

It is clear that various embodiments mentioned in the description may be combined if applicable, even if such combination is not expressly mentioned.

## Claims

1. A method (1200) for synchronizing audio playback of a first audio device and audio playback of a second audio device, wherein the first audio device (310, 410) has a first radio transmitter (414) and a second radio transmitter (415), and wherein the second audio device (320, 420) has a first radio receiver (4204) and a second radio receiver (4205), the method comprising

   - transmitting (1210) via the first radio transmitter (414) a first data stream (3301) to the second audio device (320, 420), the first data stream comprising at least synchronization packets (811-816) at fixed time intervals, wherein the synchronization packets comprise synchronization information;
   - transmitting (1220) via the second radio transmitter (415) a second data stream (3311) to the second audio device (320, 420), the second data stream comprising audio data packets (821-826);
   - receiving (1230) the first data stream (3301) at the first radio receiver (4204) and receiving (1240) the second data stream (3311) at the second radio receiver (4205) of the second audio device (320, 420);
- processing (1270, 1280), at the first audio device (310, 410), first audio data for a first playback according to said synchronization information; and
- processing (1250), at the second audio device (320, 420), second audio data received in said audio data packets of the second data stream (3311) for a second playback (1260) temporally synchronized with the first playback,
- wherein a playback time ($T_{PB1}$) of an audio data packet at the second audio device (320, 420) is determined from a time of reception ($T_{recBLE1}$) of said synchronization packet (811) of the first audio stream (3301) and from the synchronization data comprised in said synchronization packet.

2. Method according to claim 1, wherein the first radio transmitter (414) transmits the first data stream (3301) via an isochronous channel of a BLE broadcast stream, and wherein the second data stream (3302) is not a BLE stream.

3. Method according to claim 2, wherein the second data stream (3302) is a Wi-Fi or Wi-Fi Direct stream according to IEEE802.11x.

4. Method according to one of the claims 1 to 3, wherein the received audio data are stored in a buffer in the second audio device (320, 420), and wherein the stored audio data are played back with a predefined delay ($T_{Delay}$) relative to a time of reception of the synchronization packet.

5. Method according to one of the claims 1 to 4, wherein a third audio device (321, 421) has a third radio receiver (4214) and a fourth radio receiver (4215), the method further comprising steps of

- receiving the first data stream (3301) also at the third radio receiver (4214) of the third audio device (321, 421);
- receiving the second data stream (3311) also at the fourth radio receiver (4215) of the third audio device (321, 421);
- preparing a third playback of third audio data received in at least a portion of said audio data packets of the second data stream (3311) at the third audio device, wherein the third playback is temporally synchronized with the first and the second playback, and wherein the third audio device (321, 421) determines a playback time of an audio data packet from a time of reception of said synchronization packet of the first audio stream (3301) and the synchronization data comprised in said synchronization packet.

6. Method according to claim 5, wherein the second data stream (3311) is a multicast or broadcast stream.

7. Method according to one of the claims 1 to 6, wherein the synchronization information in said synchronization packets is a value in the packet header.

8. An audio playback device (410, 510, 1100) comprising

- an audio playback module (1120, 1130, 1140) adapted for buffering first audio data, the first audio data comprising at least a first portion (Ain1) of an audio data input stream (Ain), and for providing the buffered first audio data at an output (1150) for playback upon a control signal (PT);
- a first wireless transmitting device (414, 1170) adapted for transmitting a first data stream (1101) of packetized signals of a first network (3301), the packetized signals of the first network comprising synchronization packets;
- a second wireless transmitting device (415, 1160) adapted for transmitting a different second data stream (1111) of packetized signals of a second network (3311), the packetized signals of the second network comprising second audio data, the second audio data comprising at least a second part (Ain2) of said audio data input stream (Ain); and
- a synchronization module (1180) adapted for providing said control signal (PT) to the audio playback module (1130) at a pre-defined time after transmission of a synchronization packet by the first wireless transmitting device (414, 1170).

9. The audio playback device according to claim 8, wherein the first network is an isochronous channel of a BLE network, said synchronization packets are transmitted in broadcast mode of the BLE network, and the second network is a Wi-Fi or Wi-Fi Direct network.

10. The audio playback device according to claim 8 or 9, wherein the device is a soundbar that includes at least one amplifier and a plurality of loudspeakers, and wherein audio content of said first portion (Ain1) and second portion (Ain2) of the audio data input stream do not overlap.

11. The audio playback device according to one of the claims 8-10, wherein the first wireless transmitting device (414, 1170) or the second wireless transmitting device (415, 1160) creates a hidden exclusive hotspot so that the first or the second network connection (3301, 3311) can only be accessed by specified devices.

12. The audio playback device according to one of the claims 8-11, wherein the first wireless transmitting device (414, 1170) is further adapted for transmitting, in the first data stream (1101), packetized audio signals for a subwoofer.

13. A wireless loudspeaker device (420) comprising

- a first radio receiver (4204) for receiving packetized signals of a first network (3301, 614);
- a second radio receiver (4205) for receiving packetized audio data signals of a second network (3311, 615);
- a first extraction module (6404) for extracting first synchronization signals from the received packetized signals of the first network (3301, 614), wherein a time of reception of a packet comprising said first synchronization signals is recorded;
- a second extraction module (6405) for extracting second synchronization data from the received packetized signals of the second network (3311, 615);
- a buffer for buffering the packetized audio data signals of the second network (3311, 615);
- a combiner module (6401) for comparing the second synchronization data received through the second network (3311, 615) to the first synchronization signals received through the first network (3301, 614), and for indicating a match; and
- an audio output module (6401) providing audio data for playback, wherein a defined number of audio data packets is provided at a defined time after the recorded reception time if the combiner module indicates a match.

14. A wireless loudspeaker device according to claim 13, wherein the first network (3301 614) is an isochronous channel of a BLE network, said packetized signals of the first network (3301, 614) are transmitted in broadcast mode, and the second network (3311, 615) is a Wi-Fi or Wi-Fi Direct network.

15. A wireless loudspeaker device according to claim 13 or 14, further comprising a memory with configuration data for accessing a hidden exclusive hotspot for the second network (3311, 615).

Fig. 1

Fig. 2

Fig. 3

Fig. 4

Fig. 5

**Fig. 6**

**Fig. 7**

**Fig. 8**

Fig. 9

Fig. 10

**1100**

Ain → **1110** Audio Processing → **1120** Audio Packetizing

Audio Packetizing → Ain2 → Wi-Fi transmit
Audio Packetizing → Ain1 → **1130** Audio Buffer → **1140** Amp → **1150**

**1180** Time Synchronization → PT

Din → **1170** BLE transmit → 1101

**1160** Wi-Fi transmit → 1111

Fig. 11

**1200**

**1270** Locally buffer audio data

**1210** Transmit first stream

**1220** Transmit second stream

**1280** Retrieve audio data upon sync

**1230** Receive first stream

**1222** Receive second stream

**1250** Process and buffer audio data

**1290** Local loudspeaker

**1260** Remote loudspeaker

Synchronous playback

Fig. 12

Europäisches
Patentamt

European
Patent Office

Office européen
des brevets

# EUROPEAN SEARCH REPORT

**Application Number**

EP 24 16 6845

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 869 817 A1 (HUAWEI TECH CO LTD [CN]) 25 August 2021 (2021-08-25) * abstract; claim 1; figure 6 * ----- | 1-15 | INV. H04R3/12 G06F3/16 H04L65/65 H04W4/80 |
| A | US 2012/087503 A1 (WATSON CLARKE S [US] ET AL) 12 April 2012 (2012-04-12) * paragraph [0021] - paragraph [0029] * * paragraph [0046] * * figures 1-4,9 * ----- | 1-3,8,9, 13,14 | ADD. H04R5/04 |
| A | US 2019/394597 A1 (AGGARWAL ASHISH D [US] ET AL) 26 December 2019 (2019-12-26) * paragraph [0027] - paragraph [0038] * * paragraph [0106] - paragraph [0126] * * figures 1,8-12 * ----- | 1,8,13 | |
| A,D | US 2023/276515 A1 (XU BIN [CN]) 31 August 2023 (2023-08-31) * the whole document * ----- | 1,8,13 | |

**TECHNICAL FIELDS SEARCHED (IPC)**

H04R
H04L
H04W
G06F

The present search report has been drawn up for all claims

| Place of search | Date of completion of the search | Examiner |
|---|---|---|
| The Hague | 17 September 2024 | Streckfuss, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 626 029 A1**

## ANNEX TO THE EUROPEAN SEARCH REPORT
## ON EUROPEAN PATENT APPLICATION NO.

EP 24 16 6845

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2024

| Patent document cited in search report | | Publication date | Patent family member(s) | | Publication date |
|---|---|---|---|---|---|
| EP 3869817 | A1 | 25-08-2021 | CN | 112868244 A | 28-05-2021 |
| | | | EP | 3869817 A1 | 25-08-2021 |
| | | | US | 2021409856 A1 | 30-12-2021 |
| | | | WO | 2020107466 A1 | 04-06-2020 |
| US 2012087503 | A1 | 12-04-2012 | NONE | | |
| US 2019394597 | A1 | 26-12-2019 | US | 2017142535 A1 | 18-05-2017 |
| | | | US | 2019394597 A1 | 26-12-2019 |
| US 2023276515 | A1 | 31-08-2023 | CN | 112312369 A | 02-02-2021 |
| | | | US | 2023276515 A1 | 31-08-2023 |
| | | | WO | 2022068221 A1 | 07-04-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20230276515 A1